(19) **Europäisches Patentamt / European Patent Office / Office européen des brevets**

(11) **EP 2 182 648 A1**

(12) # EUROPEAN PATENT APPLICATION
published in accordance with Art. 153(4) EPC

(43) Date of publication:
**05.05.2010 Bulletin 2010/18**

(51) Int Cl.:
*H04B 3/23* (2006.01)  *H04M 1/60* (2006.01)
*H04R 3/02* (2006.01)

(21) Application number: **08791420.6**

(22) Date of filing: **22.07.2008**

(86) International application number:
**PCT/JP2008/063139**

(87) International publication number:
**WO 2009/014122 (29.01.2009 Gazette 2009/05)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.07.2007 JP 2007194612**
**25.06.2008 JP 2008165651**

(71) Applicant: **Yamaha Corporation**
**Hamamatsu-shi, Shizuoka 430-8650 (JP)**

(72) Inventor: **The designation of the inventor has not yet been filed**

(74) Representative: **Wagner, Karl H.**
**Wagner & Geyer Partnerschaft**
**Patent- und Rechtsanwälte**
**Gewürzmühlstrasse 5**
**D-80538 München (DE)**

(54) **ECHO CANCELLER**

(57)    An echo canceller capable of suppressing an echo more effectively than the case of performing filter processing by a signal of a fixed-point format while suppressing an increase in cost is provided. An echo canceller 1 includes a floating-point DSP section 10 and a fixed-point DSP section 20. The floating-point DSP section 10 has an FIR filter processing section 12, an adder 14 and a first conversion section 16. The FIR filter processing section 12 generates a pseudo echo signal of a floating-point format, and the adder 14 subtracts the pseudo echo signal from a sound collection signal and generates a first correction signal. The first conversion section 16 converts a first correction signal into the first correction signal of a fixed-point format and adjusts gain of the first correction signal. The fixed-point DSP section 20 has an FIR filter processing section 21 and an adder 22. The FIR filter processing section 21 generates a pseudo echo signal of a fixed-point format, and the adder 22 subtracts the pseudo echo signal from a first correction signal converted into a fixed-point format and generates an output signal.

*FIG. 1*

EP 2 182 648 A1

## Description

Technical Field

This invention relates to an echo canceller for eliminating an echo from a collected sound.

Background Art

Generally, in a telephone, a karaoke machine, etc. using a microphone and a speaker, a part of the sound emitted from the speaker is picked up in the microphone as a feedback sound collection signal. The emitted sound may become an echo and be emitted from a speaker of the opponent side. Then, there is a problem of causing a feeling of discomfort when a level of the echo is high.

Therefore, as one countermeasure for suppressing the echo as described above, echo cancellers are proposed until now.

One of the echo cancellers can reduce an echo by amplifying a speaker signal and giving the signal to the echo canceller even when the echo is large (see Patent Reference 1).

Also, there is an echo canceller in which an S/N ratio to background noise is improved by amplifying and outputting a signal used in learning by an adaptive filter, that is, a receiving signal from a speaker, and an echo is reduced by improving learning accuracy of the adaptive filter (see Patent Reference 2).

Patent Reference 1: JP-A-2002-290286
Patent Reference 2: JP-A-2000-101484

Disclosure of the Invention

Problems that the Invention is to Solve

However, the echo canceller shown in Patent Reference 1 has a problem that a dynamic range of a sound collection signal becomes small since the maximum value of a gain of a microphone input signal (sound collection signal) is determined by magnitude of an echo.

Also, the echo canceller shown in Patent Reference 2 has a problem that a dynamic range of a sound collection signal becomes small since an echo is also amplified by amplifying a speaker signal. That is, when an echo occurring by feedback of a sound emitted from a speaker is larger than utterance of a talker to collect a sound essentially, a dynamic range of a sound of the talker cannot be obtained sufficiently.

Generally, floating-point DSP (Digital Signal Processing) has a wider range of representable data and higher manufacturing cost than fixed-point DSP (Digital Signal Processing). As a result of that, it is also contemplated to perform a filter processing using a signal of a floating-point format as a method for extending a dynamic range of a sound collection signal. However, computation of an echo canceller requires a large amount of memory. Also, the floating-point DSP with large memory is expensive and when processing is performed by the signal of the floating-point format, there is also a problem of causing an increase in the manufacturing cost than the case of using a signal of a fixed-point format.

Therefore, an object of the invention is to provide an echo canceller capable of suppressing an echo more effectively than the case of performing the filter processing by a signal of a fixed-point format while suppressing an increase in cost.

Means for Solving the Problems

An echo canceller of the invention is connected to a sound collection section and a sound emission section and includes a first acoustic processing section and a second acoustic processing section for reducing an echo caused by collecting a sound emitted from the sound emission section in the sound collection section. The sound collection section collects a sound of a periphery and generates a sound collection signal. The sound emission section emits a sound based on a sound emission signal. The first acoustic processing section has a first filter processing section, a first arithmetic processing section and a first conversion section. The first filter processing section generates a pseudo echo signal of a floating-point format based on the sound emission signal. The first arithmetic processing section subtracts the pseudo echo signal of the floating-point format from the sound collection signal of a floating-point format to generate a first correction signal. The first conversion section converts a first correction signal of a floating-point format outputted from the first arithmetic processing section into a first correction signal of a fixed-point format and adjusts gain of the first correction signal of the converted fixed-point format. The second acoustic processing section has a second filter processing section and a second arithmetic processing section. The second filter processing section generates a pseudo echo signal of a fixed-point format based on the sound emission signal. The second arithmetic processing section subtracts the pseudo echo signal of the fixed-point format from the first correction signal of the fixed-point format to generate an output sound signal.

In this configuration, the pseudo echo signal of the floating-point format is subtracted from the sound collection signal, and the first correction signal is generated. Then, the pseudo echo signal of the fixed-point format is further subtracted from the first correction signal of the fixed-point format. Consequently, the sound collection signal can further be corrected by the pseudo echo signal of the fixed-point format after the sound collection signal is corrected by the pseudo echo signal of the floating-point format. In this case, a signal of a floating-point format in which an echo component is suppressed to a certain extent by the first acoustic processing section is inputted to the second acoustic processing section of a floating-point format. As a result of this, the second acoustic processing section of a floating-point format executes the echo cancel of the signal with a higher ratio of a targeted sound component than the original sound collection signal in a fixed-point format. Consequently, a dynamic range of the targeted sound component can be extended, so that accuracy of the echo cancel is improved.

In this configuration, the second filter processing section outputs the second coefficient information used in filter calculation to the first acoustic processing section. The first acoustic processing section further has the coefficient calculation section for calculating the first coefficient information based on the second coefficient information. The first filter processing section may correct the filter coefficient by using the first coefficient information to generate the pseudo echo signal of the floating-point format. Consequently, the first acoustic processing section can correct the filter coefficient by using the first coefficient information calculated based on the second coefficient information and generate the pseudo echo signal of the floating-point format.

Further, the first acoustic processing section may further have the second conversion section and the third conversion section. The second conversion section converts the second coefficient information outputted from the second filter processing section into a second coefficient information of a floating-point format and also adjusts gain of the second coefficient information of the converted floating-point format and outputs the adjusted second coefficient information to the coefficient calculation section. The third conversion section adjusts gain of the output sound signal from the second arithmetic processing section. A relation of a formula (1) is satisfied when values of gains in the first conversion section, the second conversion section and the third conversion section are respectively set to A, B and C.

$$(1.0/A)=B=C \ldots\ldots (1)$$

In this configuration, when the first correction signal inputted to the second acoustic processing section is amplified by the gain A, the second acoustic processing section calculates the second coefficient information or the output sound signal based on the amplified signal. However, the amplified signal is the signal amplified by the gain A with respect to the original sound collection signal, so that processing compliant with a level of the original sound collection signal cannot be executed when the signal is outputted as it is or is fed back to a first acoustic processing section. Hence, the processing compliant with the level of the original sound collection signal can be performed by multiplying a signal outputted from the second acoustic processing section by B and C which are reciprocals of the gain A.

In addition, in this configuration, the echo canceller may further include a monitoring section for monitoring a numerical value included in the second coefficient information. The monitoring section increases gain of the first conversion section when the numerical value becomes smaller than a predetermined threshold value. In this configuration, the gain of the first conversion section is increased when the value included in the second coefficient information becomes smaller than the predetermined threshold value, that is, echo elimination in a floating-point format is improved. Consequently, the first correction signal with a high ratio of a targeted sound signal such as a generated sound of an utterer of my own apparatus side is processed by a second acoustic processing section.

Also, the first acoustic processing section may further have a relaxation arithmetic processing section. The relaxation arithmetic processing section smooths the second coefficient information and outputs the second coefficient information to the coefficient arithmetic section when a change amount per predetermined time of the second coefficient information exceeds a preset upper limit value. Here, the preset upper limit value is set based on a change amount in which filter processing in a first filter processing section can be executed stably. Consequently, the filter processing can be prevented from being destabilized by smoothing and gradually changing a change amount of the second coefficient information when the change amount per predetermined time of the second coefficient information exceeds the preset upper limit value.

Also, an echo canceller may further have a gain control section for adjusting gain of the sound emission signal. Consequently, a situation in which the volume of sound of a sound emission section increases suddenly and a sound collection signal overflows can be prevented.

Advantage of the Invention

According to the invention, an echo canceller for suppressing an echo effectively by extending a dynamic range of a sound collection signal even in an environment in which the echo is larger than a generated sound of a talker can be constructed at low cost.

Brief Description of the Drawings

Fig. 1 is a diagram schematically showing a configuration of an echo canceller.
Fig. 2 is a diagram schematically showing a configuration of a fixed-point DSP section shown in Fig. 1.
Fig. 3 is a diagram schematically showing one example of a signal of an echo and a talker sound signal included in a sound collection signal in S1 shown in Fig. 1.

Fig. 4 is a diagram schematically showing one example of a signal of an echo and a talker sound signal included in a first correction signal in S2 shown in Fig. 1.

Fig. 5 is a diagram schematically showing one example of a signal of an echo and a talker sound signal included in a signal in S3 shown in Fig. 1.

Fig. 6 is a diagram schematically showing one example of a signal of an echo and a talker sound signal included in a sound signal in S4 shown in Fig. 1.

Description of Reference Numerals and Signs

| 1 | ECHO CANCELLER |
|---|---|
| 2A | A/D CONVERTER |
| 2 | MICROPHONE |
| 3A | D/A CONVERTER |
| 3 | SPEAKER |
| 10 | FLOATING-POINT DSP SECTION |
| 11 | GAIN CONTROL SECTION |
| 12 | FIR FILTER PROCESSING SECTION |
| 13 | FIR COEFFICIENT SECTION |
| 14 | ADDER (FIRST ARITHMETIC PROCESSING SECTION) |
| 15 | RELAXATION ARITHMETIC PROCESSING SECTION |
| 16 | FIRST CONVERSION SECTION |
| 17 | SECOND CONVERSION SECTION |
| 18 | SIGNAL CONVERSION SECTION |
| 19 | THIRD CONVERSION SECTION |
| 20 | FIXED-POINT DSP SECTION |
| 21 | FIR FILTER PROCESSING SECTION |
| 22 | ADDER (SECOND ARITHMETIC PROCESSING SECTION) |
| 30 | MONITORING SECTION |

Best Mode for Carrying Out the Invention

An echo canceller 1 which is one embodiment of the invention will hereinafter be described with reference to the drawings. The echo canceller 1 is formed by driving a microcomputer mounted in a conferencing system.

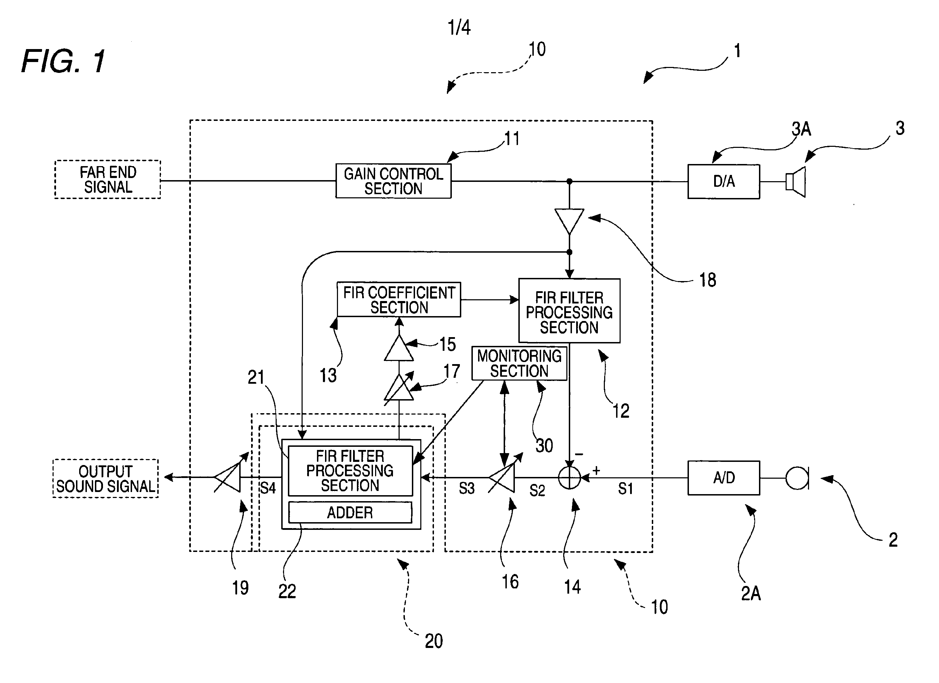

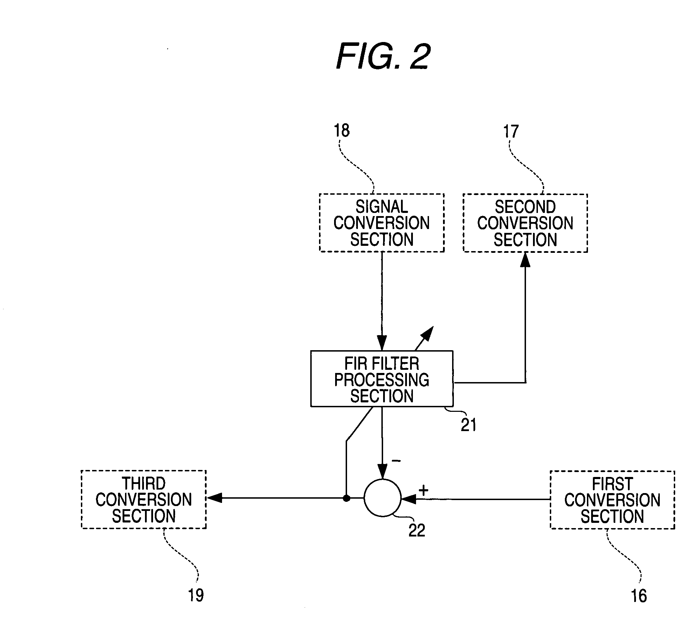

Fig. 1 is a diagram schematically showing the whole configuration of the echo canceller 1. Fig. 2 is a diagram schematically showing a configuration of a fixed-point DSP section 20 included in Fig. 1.

In Fig. 1, the echo canceller 1 includes a floating-point DSP section 10, a gain control section 11, the fixed-point DSP section 20 and a monitoring section 30, and eliminates an echo from a sound collection signal. In addition, in the echo canceller 1 according to the present embodiment, an example of the monitoring section 30 arranged in the floating-point DSP section 10 is given and described. However, the invention is not limited to this example. For example, the monitoring section 30 may be arranged in a position other than the floating-point DSP section 10.

A microphone 2 collects a sound of the periphery of the microphone 2 and generates a sound collection signal, the so-called near end signal and outputs the signal to an A/D converter 2A. The A/D converter 2A converts the sound collection signal (analog signal) from the microphone 2 into a digital signal and outputs the digital signal to an adder (first arithmetic processing section) 14.

A speaker 3 emits a sound based on a far end signal. Here, the far end signal is a digital signal inputted from an input-output interface I/F (not shown) to the echo canceller 1. Then, the far end signal is converted into an analog signal by a D/A converter 3A via the gain control section 11 (described below in detail) of the echo canceller 1 and is outputted to the speaker 3.

The gain control section 11 adjusts gain of the far end signal from the input-output interface I/F and outputs the far end signal to the D/A converter 3A and a signal conversion section 18. Consequently, a situation in which a level of the far end signal increases suddenly and the volume of sound emitted from the speaker 3 increases suddenly can be prevented. As a result of this, a situation in which an echo caused by collecting the sound emitted from the speaker 3 to the microphone 2 increases suddenly and a sound collection signal overflows (that is, clips) can be prevented.

The floating-point DSP section 10 has an FIR filter processing section 12, an FIR coefficient section 13, the adder (first arithmetic processing section) 14, a relaxation arithmetic processing section 15, a first conversion section 16, a second conversion section 17, the signal conversion section 18 and a third conversion section 19 as shown in Fig. 1. The floating-point DSP section 10 eliminates an echo included in a sound collection signal of a floating-point format. In addition, a circuit made of the FIR coefficient section 13, the relaxation arithmetic processing section 15 and the second conversion section 17 corresponds to a coefficient arithmetic section of the invention.

The fixed-point DSP section 20 has an FIR filter processing section 21 and an adder (second arithmetic processing section) 22 as shown in Figs. 1 and 2. The fixed-point DSP section 20 eliminates an echo with respect to a first correction signal in which an echo is eliminated in the floating-point DSP section 10 and conversion into a signal of a fixed-point format is made. By performing echo cancel processing of a sound collection signal in the two DSP sections of the floating-point DSP section 10 and the fixed-point DSP section 20 thus, the echo cancel processing can be performed effectively.

In addition, an echo is attenuated, that is, suppressed by about 10 to 20 dB in the floating-point DSP section 10 and the fixed-point DSP section 20.

The signal conversion section 18 outputs a far end signal inputted from the gain control section 11 to the FIR filter processing section 12 and the FIR filter processing section 21. In this case, the signal conversion section 18 adjusts gain of the far end signal so that a level of the far end signal falls within a computable range of the fixed-point DSP section 20. In addition, the signal conversion section 18 outputs the far end signals of both formats of a floating-point format and a fixed-point format.

The FIR filter processing section 12 performs filter processing using first coefficient information held in the FIR coefficient section 13. The FIR filter processing section 12 is a filter in which the far end signal of the floating-point format outputted from the signal conversion section 18 is inputted to a filter processing function to generates a pseudo echo signal of the floating-point format.

The FIR coefficient section 13 holds the first coefficient information as coefficient data used in filter processing of the FIR filter processing section 12.

Here, an initial value of each coefficient included in the first coefficient information is set at 0. The each coefficient of the first coefficient information is set based on second coefficient information. That is, the FIR coefficient section 13 calculates the first coefficient information using a signal based on the second coefficient information inputted via the second conversion section 17 and the relaxation arithmetic processing section 15. In the embodiment, an example of setting all the initial values of each of the coefficients described above at 0 is given and described. However, the invention is not limited to this example. For example, the initial value may be changed according to specifications of the floating-point DSP section 10 or terms and conditions of use environment etc. Also, it is unnecessary to match all the initial values of each of the coefficients.

The adder 14 subtracts the pseudo echo signal of the floating-point format from a sound collection signal of a floating-point format to generate a first correction signal and outputs the first correction signal to the first conversion section 16.

The first conversion section 16 converts a format of the first correction signal into a fixed-point format, and also adjusts gain of the first correction signal based on a gain amount set by the monitoring section 30 (described below in detail) and outputs the adjusted first correction signal to the adder 22 (see Fig. 2) of the fixed-point DSP section 20.

The FIR filter processing section 21 is an adaptive filter processing section which inputs a far end signal of a fixed-point format outputted from the signal conversion section 18 into a filter processing function to generate a pseudo echo signal of the fixed-point format. Here, the FIR filter processing section 21 updates second coefficient information used in the filter processing function with reference to an output sound signal passing through the adder 22. Further, the FIR filter processing section 21 outputs the second coefficient information to the second conversion section 17.

The second conversion section 17 converts the second coefficient information into a signal of a floating-point format and also adjusts gain of the signal according to gain of the first conversion section 16 and outputs the adjusted signal to the relaxation arithmetic processing section 15.

The adder 22 subtracts a pseudo echo signal of a fixed-point format outputted from the FIR filter processing section 21 from a first correction signal of a fixed-point format outputted from the first conversion section 16 to generate an output sound signal and outputs the output sound signal to the third conversion section 19.

The third conversion section 19 converts the output sound signal of the fixed-point format into an output sound signal of a floating-point format and also adjusts output gain of the output sound signal according to gain of the first conversion section 16 and outputs the adjusted output sound signal to an echo suppressor (not shown). The echo suppressor attenuates gain of the inputted output sound signal by about 20 to 30 dB and then outputs the adjusted output sound signal to an input-output I/F interface (not shown).

In addition, in the embodiment, an example of attenuating gain of the output sound signal by the echo suppressor is given and described. However, the invention is not limited to this example. It is unnecessary to provide the echo suppressor when an echo included in the output sound signal can be attenuated sufficiently.

Also, it is preferable to attenuate a sound collection signal by about 40 to 50 dB in order to eliminate an echo, but degradation in sound quality may be caused when the echo is attenuated by only the echo suppressor.

On the other hand, in the echo canceller 1, an echo is attenuated by about 20 dB by the floating-point DSP section 10 and the fixed-point DSP section 20 and then is inputted to the echo suppressor, so that an effect of suppressing degradation in sound quality can also be obtained.

Here, gain adjustment in the first conversion section 16, the second conversion section 17 and the third conversion section 19 is described more concretely as follows.

When values of gains in the first conversion section 16, the second conversion section 17 and the third conversion section 19 are respectively set to A, B and C, an increase-decrease value of each of the gains satisfies a relation of a formula (1).

$$(1.0/A)=B=C \quad \ldots \ldots (1)$$

Consequently, sizes of gains in a first correction signal (see S2 shown in Fig. 1) outputted from the adder 14 to the first conversion section 16 and an output sound signal outputted from the fixed-point DSP section 20 through the third conversion section 19 can be equalized. Also, the second conversion section 17 decreases gain by the size of gain increased in the first conversion section 16 in the case of outputting second coefficient information to the relaxation arithmetic processing section 15. Consequently, the second coefficient information in which an influence of gain given to the first correction signal in the first conversion section 16 is canceled can be set.

When a change amount per predetermined time unit of each of the coefficients included in the second coefficient information outputted from the second conversion section 17 exceeds a preset upper limit value, the relaxation arithmetic processing section 15 smooths each of the coefficients described above and then outputs each of the coefficients to the FIR coefficient section 13.

Also, when the second coefficient information is directly inputted from the second conversion section 17 to the FIR coefficient section 13 without intervention of the relaxation arithmetic processing section 15, a time change rate of each of the coefficients included in the second coefficient information may be too large in filter processing in the FIR filter processing section 12. That is, nonlinearity of a change with time of each of the coefficients described above may be too large.

When nonlinearity of first coefficient information is too large thus, there is also fear of causing destabilization of echo elimination processing in the floating-point DSP section 10 and the fixed-point DSP section 20, that is, destabilization of a system.

Therefore, when a change with time of each of the coefficients included in the second coefficient information outputted from the second conversion section 17 is larger than a predetermined change amount, the relaxation arithmetic processing section 15 smooths each of the coefficients described above and relaxes the change with time. Consequently, the echo elimination processing can be prevented from being destabilized.

The monitoring section 30 monitors a size of each of the coefficients included in the second coefficient information calculated in the second filter processing section 21. Then, the monitoring section 30 increases the amount of gain in the first conversion section 16 when the size of each of the coefficients included in the second coefficient information becomes smaller than a predetermined threshold value.

In addition, the second coefficient information is updated every predetermined time with reference to the output sound signal and the first coefficient information is similarly updated based on the second coefficient information.

More concretely, an initial value of each of the coefficients included in the first coefficient information is set to 0 at the time of starting echo elimination processing in the floating-point DSP section 10 and the fixed-point DSP section 20. As a result of this example, the echo elimination processing is not performed in the floating-point DSP section 10 and the echo elimination processing is executed in only the fixed-point DSP section 20 positioned in the downstream side of the signal processing.

Then, when the echo elimination processing in the FIR filter processing section 21 is executed, the first coefficient information is updated by adding information calculated based on the second coefficient information, that is, a value obtained by multiplying the second coefficient information by coefficients of the relaxation arithmetic processing section 15 and the second conversion section 17 to the first coefficient information in the FIR coefficient section 13. The updated first coefficient information is inputted to the FIR filter processing section 12, and the FIR filter processing section 12 executes the filter processing using the first coefficient information. Consequently, the pseudo echo signal of the floating-point format is generated in the FIR filter processing section 12 and the echo elimination processing is also executed in the floating-point DSP section 10.

An echo component included in a first correction signal outputted from the floating-point DSP section 10 to the fixed-point DSP section 20 decreases by executing the echo elimination processing in the floating-point DSP section 10. Consequently, the echo elimination processing in the floating-point DSP section 10 is updated to more optimum processing based on a result of the echo elimination processing in the fixed-point DSP section 20 and accuracy of the echo elimination processing improves with processing time. More concretely, when the processing time passes, a value of each of the coefficients included in the second coefficient information becomes small as an echo signal component included in an output sound signal decreases.

When a size of each of the coefficients included in the second coefficient information falls below a predetermined threshold value, the monitoring section 30 increases a size of gain added to the first correction signal in the first conversion section 16 by a predetermined value. In this case, a value of each of the coefficients included in the second coefficient information increases temporarily but when the processing time passes further, the echo signal component decreases further, so that each of the coefficients described above decreases again. By repeatedly executing a series of echo elimination processing in the floating-point DSP section 10 and the fixed-point DSP section 20 thus, the echo signal component included in the output sound signal can be eliminated with high accuracy.

When the echo elimination processing is repeatedly executed further, an echo signal included in the first correction signal becomes smaller than a signal of a sound collected essentially, for example, a talker utterance signal at some point in time. When the echo signal falls below the talker utterance sound thus, the amount of increase in gain of the first conversion section 16 can be determined on the basis of a level of the talker utterance sound. As a result of that, for example, the talker utterance sound can be amplified to the full of a dynamic range of the fixed-point DSP section 20.

Consequently, the echo canceller for attenuating an echo effectively by extending a dynamic range to the targeted talker utterance sound even in an environment in which the echo is larger than the talker utterance sound etc. can be constructed at low cost.

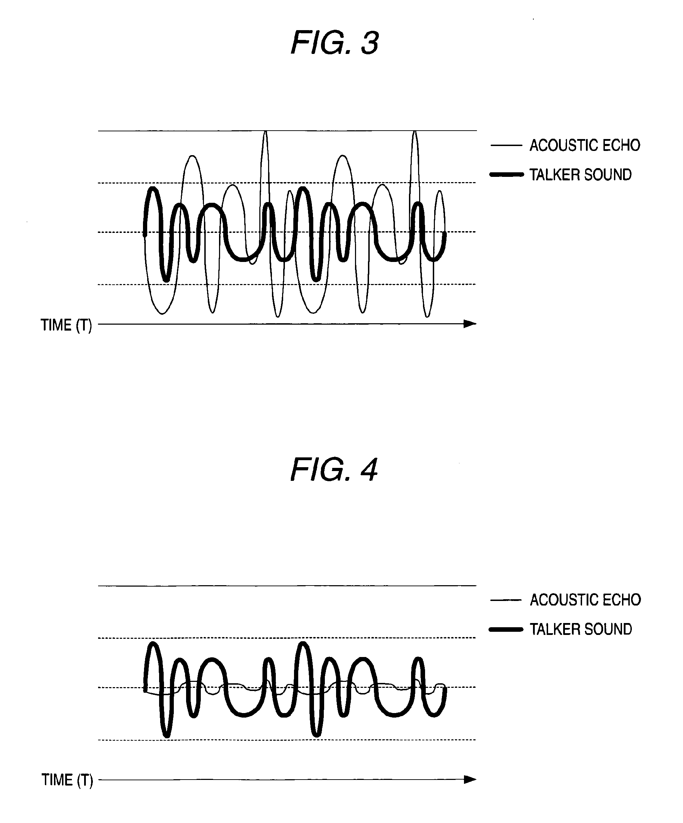

A change by the processing described above of a signal waveform (sound pressure value) in the echo elimination processing in the floating-point DSP section 10 and the fixed-point DSP section 20 is described by using Figs. 3 to 6 as follows.

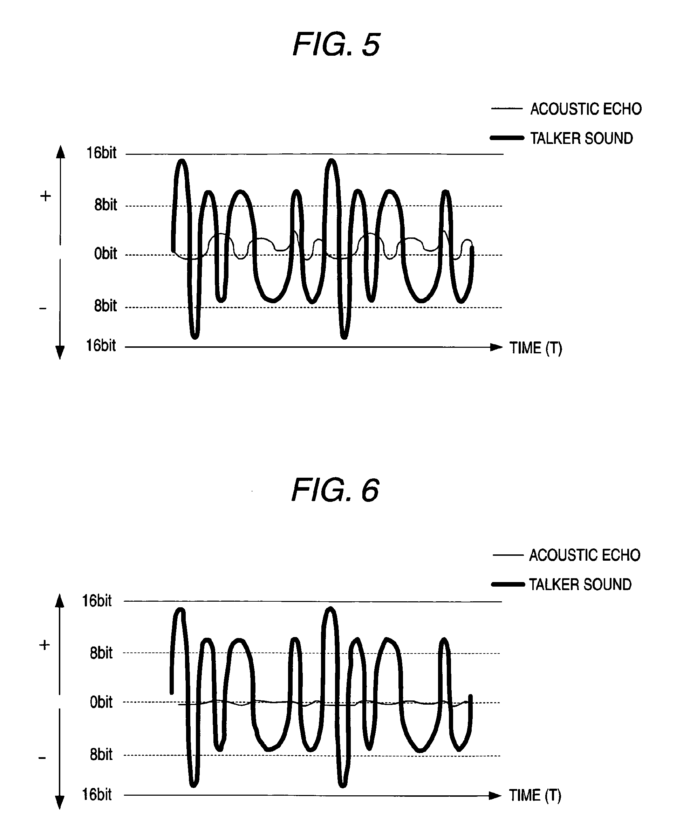

Fig. 3 is a diagram schematically showing one example of changes with time of a signal of an echo and a sound signal of a talker included in a sound collection signal before the sound collection signal which had passes through the A/D converter 2A is inputted to the adder 14 (see S1 shown in Fig. 1). Fig. 4 is a diagram schematically showing a signal of an echo and a sound signal of a talker included in a first correction signal outputted from the adder 14 to the first conversion section 16 (see S2 shown in Fig. 1). Fig. 5 is a diagram schematically showing a signal of an echo and a sound signal of a talker included in a signal outputted from the first conversion section 16 to the fixed-point DSP section 20 (see S3 shown in Fig. 1). Fig. 6 is a diagram schematically showing a signal of an echo and a sound signal of a talker included in a sound signal outputted from the adder 22 to the third conversion section 19 (see S4 shown in Fig. 1). In addition, the signals in S1 and S2 are signals of floating-point formats of 32 bits formed by a sign part of 1 bit, an exponent part of 8 bits and a mantissa part of 23 bits. As a result of this, the signal waveforms shown in Figs. 3 and 4 show numerical values of the mantissa parts. Also, the signals in S3 and S4 are signals of fixed-point formats of 32 bits made of ±16 bits including a sign part of 1 bit.

In the adder 14, the pseudo echo signal generated by the FIR filter processing section 12 is subtracted from the sound collection signal outputted from the A/D converter 2A, and the first correction signal in which a signal of an echo shown in Fig. 3 is reduced (suppressed) to a level of a signal of an echo shown in Fig. 4 is generated.

Next, in the first conversion section 16, gain of the first correction signal is amplified so that signal processing in the fixed-point DSP section 20 can be performed properly (see Fig. 5). Consequently, in the signal processing in the fixed-point DSP section 20, signal processing can be executed using a dynamic range efficiently while preventing occurrence of an overflow.

Further, in the adder 22, a pseudo echo signal generated in the FIR filter processing section 21 is subtracted from a signal of a fixed-point format outputted from the first conversion section 16, and an output sound signal is generated (see Fig. 6).

Finally, the generated output sound signal is attenuated by an echo suppressor (not shown) and is outputted to an input-output I/F interface (not shown).

By further executing echo cancel by the fixed-point DSP section 20 after the echo cancel is executed by the floating-point DSP section 10 as described above, the echo cancel can be executed more effectively than the case of executing the echo cancel using the fixed-point DSP section 20 simply. In this case, the echo cancel is previously executed by the floating-point DSP section 10 and gain of a signal inputted to the fixed-point DSP section 20 is adjusted according to a dynamic range of the fixed-point DSP section 20 and thereby, the fixed-point DSP section 20 can be used more effectively with respect to echo cancel processing. Consequently, the echo cancel with higher accuracy can be implemented. Also, it is contemplated to execute such processing by floating-point DSP including functions of floating-point DSP and fixed-point DSP, but cost of the floating-point DSP becomes higher, so that cost can be reduced by using a configuration of the present embodiment.

In addition, explanation of the embodiment described above is illustrative in all respects, and should be considered as non-restriction. The scope of the invention is shown by the claims rather than the embodiment described above. Further, the scope of the invention is intended to include all the changes within the scope and meaning equivalent to the claims.

The invention is based on Japanese patent application (patent application No. 2007-194612) filed on July 26, 2007 and Japanese patent application (patent application No. 2008-165651) filed on June 25, 2008, and the contents of the patent applications are hereby incorporated by reference.

**Claims**

1. An echo canceller which is connected to a sound collection section for collecting a sound of a periphery and generating a sound collection signal and a sound emission section for emitting a sound based on a sound emission signal, comprising:

a first acoustic processing section and a second acoustic processing section for reducing an echo caused by collecting the sound emitted from the sound emission section in the sound collection section,
wherein the first acoustic processing section includes:

a first filter processing section for generating a pseudo echo signal of a floating-point format based on the sound emission signal;
a first arithmetic processing section for subtracting the pseudo echo signal of the floating-point format from the sound collection signal inputted in a floating-point format to generate a first correction signal; and
a first conversion section for converting the first correction signal of the floating-point format outputted from the first arithmetic processing section into a first correction signal of a fixed-point format and adjusting gain of the first correction signal of the converted fixed-point format; and

wherein the second acoustic processing section includes:

a second filter processing section for generating a pseudo echo signal of a fixed-point format based on the sound emission signal; and

a second arithmetic processing section for subtracting the pseudo echo signal of the fixed-point format from the first correction signal of the fixed-point format to generates an output sound signal.

2.   The echo canceller according to claim 1, wherein the second filter processing section outputs second coefficient information used in filter calculation to the first acoustic processing section;
wherein the first acoustic processing section further includes a coefficient calculation section for calculating first coefficient information based on the second coefficient information; and
wherein the first filter processing section corrects a filter coefficient by the first coefficient information to generate the pseudo echo signal of the floating-point format.

3.   The echo canceller according to claim 2, wherein the first acoustic processing section further includes:

a second conversion section for converting the second coefficient information outputted from the second filter processing section into a second coefficient information of a floating-point format, adjusting gain of the second coefficient information of the converted floating-point format, and outputting the adjusted second coefficient information to the coefficient calculation section; and
a third conversion section for adjusting gain of the output sound signal from the second arithmetic processing section; and
wherein a relation of a formula (1) is satisfied when values of gains in the first conversion section, the second conversion section and the third conversion section are respectively set to A, B and C.

$$(1.0/A)=B=C \ \ldots\ldots\ (1)$$

4.   The echo canceller according to claim 3, further comprising a monitoring section for monitoring a numerical value included in the second coefficient information,
wherein the monitoring section increases the gain of the first conversion section when the numerical value becomes smaller than a predetermined threshold value.

5.   The echo canceller according to any one of claims 2 to 4, wherein the first acoustic processing section further includes a relaxation arithmetic processing section for smoothing the second coefficient information and outputting the smoothed second coefficient information to the coefficient calculation section when a change amount per predetermined time of the second coefficient information exceeds a preset upper limit value.

6.   The echo canceller according to any one of claims 1 to 5, further comprising a gain control section for adjusting gain of the sound emission signal.

FIG. 1

FIG. 2

## FIG. 3

ACOUSTIC ECHO
TALKER SOUND

TIME (T)

## FIG. 4

ACOUSTIC ECHO
TALKER SOUND

TIME (T)

## FIG. 5

## FIG. 6

# INTERNATIONAL SEARCH REPORT

| International application No. |
| --- |
| PCT/JP2008/063139 |

A.  CLASSIFICATION OF SUBJECT MATTER
*H04B3/23*(2006.01)i, *H04M1/60*(2006.01)i, *H04R3/02*(2006.01)i

According to International Patent Classification (IPC) or to both national classification and IPC

B.  FIELDS SEARCHED

Minimum documentation searched (classification system followed by classification symbols)
H04B3/20-3/23, H04M1/60, H04R3/02

Documentation searched other than minimum documentation to the extent that such documents are included in the fields searched
Jitsuyo Shinan Koho         1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 1-129623 A  (Hitachi, Ltd.),<br>22 May, 1989 (22.05.89),<br>Page 2, upper right column, line 6 to page 4,<br>upper right column, line 14; Figs. 1, 2<br>(Family: none) | 1-6 |
| A | JP 2000-502862 A  (Ericsson Inc.),<br>07 March, 2000 (07.03.00),<br>Page 16, line 20 to page 20, line 7; Fig. 2<br>& US 5777913 A          & WO 1997/024805 A1 | 1-6 |
| A | JP 2000-101484 A  (Fujitsu Ltd.),<br>07 April, 2000 (07.04.00),<br>Par. Nos. [0063] to [0068]; Fig. 6<br>& US 6704415 B1 | 1-6 |

☐  Further documents are listed in the continuation of Box C.          ☐  See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>16 October, 2008 (16.10.08) | Date of mailing of the international search report<br>28 October, 2008 (28.10.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

## REFERENCES CITED IN THE DESCRIPTION

**Patent documents cited in the description**

- JP 2002290286 A
- JP 2000101484 A
- JP 2007194612 A
- JP 2008165651 A